# EUROPEAN PATENT SPECIFICATION

(11) **EP 3 687 212 B1**
(45) Date of publication and mention of the grant of the patent: **10.05.2023**
(21) Application number: 17929167.9
(22) Date of filing: 17.10.2017
(51) Int. Cl.: H04W 24/08, H04W 88/06

(54) **MEASUREMENT CONFIGURATION METHOD AND SYSTEM FOR TERMINAL HAVING MULTI-RADIO-FREQUENCY RECEPTION CAPABILITY**
MESSKONFIGURATIONSVERFAHREN UND -SYSTEM FÜR EIN ENDGERÄT MIT MEHRFREQUENZEMPFANGSFÄHIGKEIT
PROCÉDÉ ET SYSTÈME DE CONFIGURATION DE MESURE POUR UN TERMINAL À CAPACITÉ DE RÉCEPTION MULTI-RADIOFRÉQUENCE

(43) Date of publication of application: 29.07.2020
(73) Proprietor: GUANGDONG OPPO MOBILE TELECOMMUNICATIONS CORP., LTD., Wusha, Chang'an Dongguan, Guangdong 523860 (CN)
(72) Inventor: YANG, Ning, Dongguan Guangdong 523860 (CN); LIU, Jianhua, Dongguan Guangdong 523860 (CN); ZHANG, Zhi, Dongguan Guangdong 523860 (CN)
(74) Representative: Manitz Finsterwald Patent- und Rechtsanwaltspartnerschaft mbB
(86) International application number: PCT/CN2017/106603
(87) International publication number: WO 2019/075648

(56) References cited:
- CN-A- 102 958 091
- CN-A- 103 037 399
- CN-A- 105 228 198
- US-A1- 2015 323 645
- US-A1- 2016 302 098
- NEC: "Measurement coordination in LTE-NR DC", 3GPP DRAFT; R2-1705267_MSMNT LTE-NR DC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051275732, Retrieved from the Internet: URL:http://www.3gpp.org/ftp/Meetings_3GPP_ SYNC/RAN2/Docs/ [retrieved on 2017-05-14]
- INTEL CORPORATION: "UE and network handling for NR measurement configuration", 3GPP DRAFT; R2-1704814-MEASUREMENT_V00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051275332, Retrieved from the Internet: URL:http://www.3gpp.org/ftp/Meetings_3GPP_ SYNC/RAN2/Docs/ [retrieved on 2017-05-14]
- NTT DOCOMO ET AL: "Summary of email discussion [97bis#10][NR] MN/SN measurement coordination", 3GPP DRAFT; R2-1704138_SUMMARYOFEMAILDISC97BIS#10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 6 May 2017 (2017-05-06), XP051264289, Retrieved from the Internet: URL:http://www.3gpp.org/ftp/tsg_ran/WG2_RL 2/TSGR2_98/Docs/ [retrieved on 2017-05-06]
- HUAWEI ET AL: "Discussion on secondary node change procedure", 3GPP DRAFT; R2-1703653 DISCUSSION ON SECONDARY NODE CHANGE PROCEDURE V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Spokane, USA; 20170403 - 20170407 3 April 2017 (2017-04-03), XP051245480, Retrieved from the Internet: URL:http://www.3gpp.org/ftp/Meetings_3GPP_ SYNC/RAN2/Docs/ [retrieved on 2017-04-03]

## Description

### TECHNICAL FIELD

The application relates to the field of wireless communications, and more particularly, to a technology of measurement configuration of a terminal.

### BACKGROUND

In a conventional wireless communication system (for example, Global System for Mobile communication (GSM)/Wideband Code Division Multiple Access (WCDMA)/Long Term Evolution (LTE)), a hypothesis is usually made on a network side that one transmitting and receiving Radio Frequency (RF) chain is adopted for a terminal, that is, the terminal, when receiving data from a network (for example, LTE) or at a frequency point (for example, 1.9GHz), cannot receive data from another network (for example, WCDMA) or at another frequency point (for example, 2.6GHz). Under this condition, the network needs to configure a measurement gap for the terminal. In such a case, data cannot be transmitted from the network or at the frequency point originally serving the terminal, and the terminal needs to retune the RF chain to a corresponding frequency for measurement and then retune the RF chain back to the original frequency point at the end of the measurement gap to continue reception of downlink data.

According to the above method, downlink data transmission on an original chain is interrupted during RF chain retuning, and consequently, a throughput of a user may be greatly influenced.

Support to multiple RF chains has been gradually considered to be introduced to a future communication system. For example, under an LTE dual connectivity condition, a terminal considers to simultaneously receive and send data on two chains. In an LTE-New Radio (NR) multi-connection scenario and a NR-NR multi-connection scenario supported in a future NR network, a terminal may also simultaneously receive and send data on two chains. This is mainly because frequencies of two access points are greatly different in the LTE-NR or NR-NR scenario, which makes it impossible for them to share an RF chain, for example, LTE works at 2.6GHz while NR works at a band such as 4.8GHz or even higher 28Hz or 38GHz.

In a multi-RF-chain scenario, how to ensure throughput performance of a terminal as much as possible on the premise of ensuring measurement accuracy becomes a problem to be solved.

R2-1705267 titled with "Measurement coordination in LTE-NR DC", R2-1704814 titled with "LTE and network handling for NR measurement configuration", R2-1704138 titled with "Summary of email discussion [97bis#10][NR] MN/SN measurement coordination" and R2-1703653 titled with "Discussion on secondary node change procedure" discuss related technology.

### SUMMARY

The present invention is defined in the claims.

The application is intended to provide measurement configuration methods, and a multi-RF chain terminal, as claimed in claims 1-4, respectively.

Compared with a conventional art, implementation modes of the application have the advantages that, for a terminal with a multi-RF capability, particularly a multi-RF receiving capability, throughput performance of the terminal can be ensured as much as possible on the premise of ensuring measurement accuracy.

### BRIEF DESCRIPTION OF DRAWINGS

FIG. 1 is a schematic diagram of an LTE-NR multi-connection scenario according to the disclosure.
FIG. 2 is a flowchart of a measurement configuration method for a terminal with a multi-RF receiving capability according to a first implementation mode of the disclosure.
FIG. 3 is a flowchart of an example according to the first implementation mode of the disclosure.

### DETAILED DESCRIPTION

In the following descriptions, many technical details are proposed to make a reader understand the application better. However, those of ordinary skill in the art should know that the technical solutions claimed by the application can also be implemented even without these technical details or various variations and modifications made based on each of the following implementation modes.

### Descriptions about concepts:

LTE: long term evolution;
NR: a radio access part in 5th-Generation (5G) and an abbreviation of new radio;
MN: master node;
SN: second node;
Measurement GAP: measurement gap;
GSM: global system for mobile communication;
WCDMA: wideband code division multiple access; and
Terminal: also called User Equipment (UE), a wireless terminal, a mobile terminal and a mobile station, etc.

Part of innovation points of the application will be briefly described below.

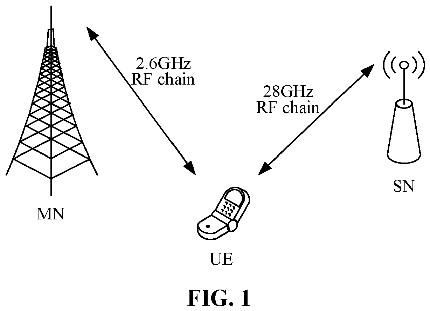

A terminal with a multi-RF capability may establish multiple RF chains with network nodes in multiple wireless networks simultaneously. For example, the terminal may be connected with a first network node in a first wireless network through a first RF chain and may be simultaneously connected with a second network node in a second wireless network through a second RF chain. In a case that the first network node is required to measure a measurement object, for example, a frequency point, a band or a band group, covered by the second RF chain, the first network node may send a measurement request message containing information of the measurement object to the second network node; the second network node, after receiving the measurement request message, may determine whether to accept the measurement request or not and, if the second network node determines to accept the measurement request, the second network node may generate measurement configuration information, and send the measurement configuration information directly to the terminal through the second RF chain or forward the measurement configuration information to the terminal by the first network node through the first RF chain. The terminal, after completing RF measurement on the second RF chain according to the measurement configuration information, may send an RF measurement result directly to the first network node through the first RF chain or forward the RF measurement result to the first network node through the second RF chain and the second network node. Since no measurement gap is set for the first RF chain in the whole measurement process, throughput performance of the first RF chain can be ensured. In addition, since the measurement configuration information is generated by the second network node (the first network node only provides a measurement object but does not generate measurement configuration information) and RF measurement is implemented on the second RF chain, the measurement object can be completely covered by the second RF chain, and the measurement accuracy can be ensured. A preferred application scenario of the technical solution is an LTE-NR multi-connection scenario. Due to limitations of LTE and NR bands, it is impossible to adopt a RF chain of LTE or NR to measure another chain. Therefore, when a network on one side needs to know signal quality of a network on the other side, coordination between the two networks can be implemented by use of the above technical solution, and an RF chain of the network on the other side can be adopted for measurement to solve a problem about measurement between different frequencies. In an application scenario, as shown in FIG. 1, UE is connected with a network node MN in an LTE network through a 2.6GHz RF chain, the UE is simultaneously connected with a network node SN in an NR network through a 28GHz RF chain, and if the SN needs to know an RF measurement result of the MN or the MN needs to know an RF measurement result of the SN, the above technical solution may be adopted.

Although the above described is a scenario involving two RF chains, the technical solution definitely can be applied to a scenario involving multiple RF chains. A network node, when needing to measure measurement objects in N other wireless networks, may send measurement request messages containing information of the measurement objects to network nodes in the N other wireless networks respectively, namely N measurement request messages are sent to N network nodes respectively, the N network nodes may generate measurement configuration information according to the information of the measurement objects respectively and directly or indirectly send the measurement configuration information to a terminal, and the terminal may perform RF measurement on N RF chains according to the N pieces of measurement configuration information respectively and directly or indirectly report N RF measurement results to the network node that initially sent the measurement request messages. Optionally, the N RF measurement results, after being summarized, may be reported to a network side by a certain RF chain in a unified manner.

In order to make the purpose, technical solutions and advantages of the application clearer, the implementation modes of the application will be further described below in combination with the drawings in detail.

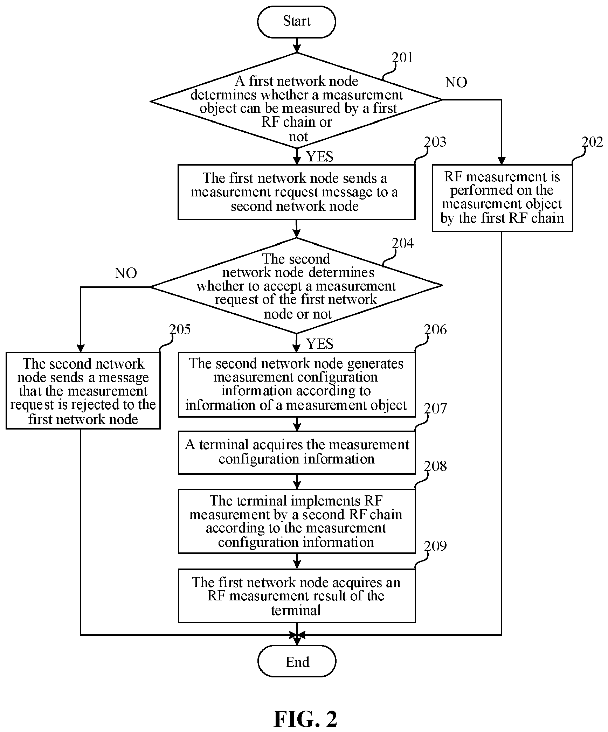

A first implementation mode of the disclosure relates to a measurement configuration method for a terminal with a multi-RF receiving capability. FIG. 2 is a flowchart of the measurement configuration method for a terminal with a multi-RF receiving capability. According to the measurement configuration method for a terminal with a multi-RF receiving capability, the terminal is connected with a first network node in a first wireless network through a first RF chain, and the terminal is also connected with a second network node in a second wireless network through a second RF chain. Optionally, the first wireless network is an LTE network, and the second wireless network is an NR network. Optionally, the first wireless network is an NR network, and the second wireless network is an LTE network. Optionally, both the first and second wireless networks are NR networks. Optionally, the first wireless network and the second wireless network may be two independent networks. Optionally, the first wireless network and the second wireless network may be the same network.

The method may include the following steps.

In step 201, the first network node determines whether a measurement object can be measured by the first RF chain or not; if not, step 203 is executed, otherwise step 202 is executed. The measurement object may be a frequency point, a band or a band group, measurement information, measurement configuration information and the like. Optionally, the measurement object may be out of a band range supported by the first RF chain and within a band range supported by the second RF chain. Optionally, the measurement object may also be within the band range supported by the first RF chain, but the first RF chain cannot be used for measurement for ensuring throughput of the first RF chain, etc.

In step 202, RF measurement is performed on the measurement object by the first RF chain, and then the flow is ended.

In step 203, the first network node sends a measurement request message to the second network node, the measurement request message including information of a measurement object.

Then, step 204 is executed, namely the second network node, after receiving the measurement request message, may determine whether to accept a measurement request of the first network node or not; if the second network node does not accept the measurement request, step 205 is executed, and if the second network node accepts the measurement request, step 206 is executed.

In step 205, the second network node sends a message that the measurement request is rejected to the first network node, and then the flow is ended.

In step 206, the second network node generates measurement configuration information according to the information of the measurement object. The measurement configuration information includes information such as measurement gap information and a correspondence between a measurement gap and a measurement object. Thereby, the second network node generates all or part of the measurement configuration information.

Then, step 207 is executed, namely the terminal acquires the measurement configuration information. As an example useful for understanding the invention but not forming a part of the present invention, the second network node may send the measurement configuration information to the terminal through the second RF chain. The second network node sends the measurement configuration information to the first network node, and the first network node sends the measurement configuration information to the terminal through the first RF chain.

Then, step 208 is executed, namely the terminal implements RF measurement by the second RF chain according to the measurement configuration information to obtain an RF measurement result. Optionally, the RF measurement result may include information of the measured frequency point, the measured band or the measured band group and/or a corresponding measurement result.

Then, step 209 is executed, namely the first network node acquires the RF measurement result of the terminal. The terminal sends the RF measurement result to the first network node through the first RF chain. As an example useful for understanding the invention but not forming a part of the present invention, the terminal may send the RF measurement result to the second network node through the second RF chain, and the second network node may forward the RF measurement result to the first network node.

According to the technical solution, for a terminal with a multi-RF capability, particularly a multi-RF receiving capability, throughput performance of the terminal can be ensured as much as possible on the premise of ensuring measurement accuracy.

Steps 201 and 202 are optional. That is, the first network node does not need to determine whether RF measurement can be performed on the measurement object by the first RF chain or not, or, even though the first network node can perform RF measurement on the measurement object, RF measurement can also be performed on the measurement object through the second RF chain by steps 203 to 209.

Steps 204 and 205 are also optional. That is, the second network node does not need to determine whether to accept the measurement request of the first network node or not or provide an option of rejecting the measurement request.

For better understanding the technical solution, an example will be given below.

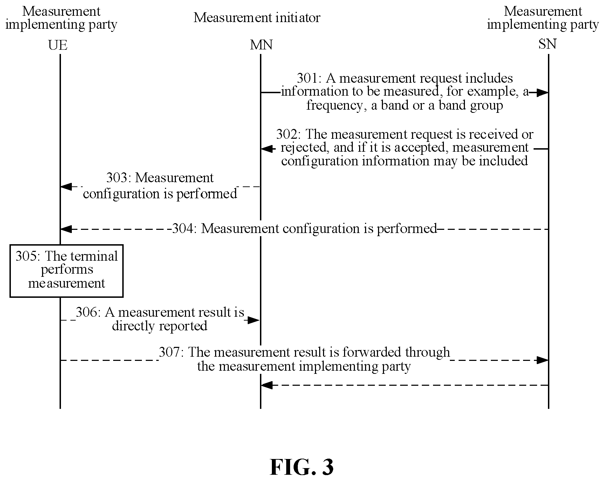

In the scenario shown in FIG. 1, when a measurement initiator (a MN) configures a terminal (UE) to measure a frequency point of a measurement implementing party (a SN), a flow is as shown in FIG. 3. The measurement initiator is the MN (equivalent to the first network node in the above-mentioned technical solution), there are two measurement implementing parties, which are the SN (equivalent to the second network node in the above-mentioned technical solution) that is the measurement implementing party on a network side and the terminal, i.e., the UE that is the other measurement implementing party. In such a case, the required measurement frequency point may be the same as or different from a frequency point that the measurement implementing party originally expects to measure. Of course, the measurement initiator and measurement implementing party on the network side may be exchanged, namely the measurement initiator may be the SN and the measurement implementing party may be the MN, and in such a case, a processing manner is similar.

In step 301, when the network node MN (for example, LTE 2.6GHz) acting as the measurement initiator determines that the terminal cannot measure the network node SN acting as the implementing party through a corresponding chain (a 2.6GHz RF chain of an LTE network), the network node acting as the measurement initiator coordinates with the network node acting as the measurement implementing party, for example, the network node acting as the measurement initiator may notify the measurement implementing party of a corresponding measurement object, such as information of a frequency point, through a network-side interface (for example, Xn).

Then, step 302 is executed, namely the measurement implementing party may accept or reject a measurement request; if the measurement implementing party accepts the measurement request, a measurement gap is configured; and if the measurement implementing party rejects the measurement request, a reply is given through the network interface (for example, Xn).

In a case that the measurement implementing party accepts the measurement request and configures a measurement parameter, for example, the measurement gap, the measurement configuration parameter may be sent to the terminal. Sending may be implemented through the measurement implementing party (as shown in step 304), or may be implemented by the measurement initiator (as shown in step 303). During measurement configuration, a correspondence between the measurement gap and measurement object (for example, an identifier of a frequency point, a band or a band group) is required to be configured so as to notify the terminal of the specific frequency point, band or band group that the measurement gap is configured for. Here, the band group may be a combination of all bands that may be covered by an RF chain of the terminal.

In step 305, the terminal performs measurement through an RF chain (for example, a 28GHz RF chain of an NR network) according to the measurement configuration parameter.

The terminal, after completing measurement, may report the measurement to the measurement initiator directly (shown in step 306), or may report to the measurement initiator after forwarding the measurement report to the measurement implementing party (shown in step 307). During reporting, information of the corresponding frequency point, band or band group is required to be contained.

A second implementation mode of the disclosure relates to a measurement configuration method for a terminal with a multi-RF receiving capability. The implementation mode is an implementation of the first implementation mode on a network side, and related details are the same as those in and may refer to the first implementation mode.

According to the measurement configuration method for a terminal with a multi-RF receiving capability, the terminal is connected with a first network node in a first wireless network through a first RF chain, and the terminal is connected with a second network node in a second wireless network through a second RF chain. The method may include the following steps.

The second network node may receive information of a measurement object from the first network node.

The second network node may generate measurement configuration information according to the information of the measurement object.

The measurement configuration information may be sent to the terminal to implement RF measurement by the second RF chain according to the measurement configuration information. Optionally, the second network node may send the measurement configuration information to the terminal through the second RF chain. Optionally, the second network node may send the measurement configuration information to the first network node, and the first network node may send the measurement configuration information to the terminal through the first RF chain.

The first network node may acquire an RF measurement result of the terminal. Optionally, the first network node may obtain the RF measurement result from the terminal through the first RF chain. Optionally, the second network node may obtain the RF measurement result from the terminal through the second RF chain, and then the second network node may forward the RF measurement result to the first network node.

A third implementation mode of the disclosure relates to a measurement configuration method for a terminal with a multi-RF receiving capability. The implementation mode is an implementation of the first implementation mode on a terminal side, and related details are the same as those in and may refer to the first implementation mode.

According to the measurement configuration method for a terminal with a multi-RF receiving capability, the terminal is connected with a first network node in a first wireless network through a first RF chain, and the terminal is also connected with a second network node in a second wireless network through a second RF chain.

The method may include the following steps.

The terminal may acquire measurement configuration information; the measurement configuration information may be generated by the second network node according to information of a measurement object of the first network node.

The terminal may make RF measurement by the second RF chain according to the measurement configuration information.

The terminal may report an RF measurement result to the first network node. Optionally, the terminal may send the RF measurement result to the first network node through the first RF chain. Optionally, the terminal may send the RF measurement result to the second network node through the second RF chain, and the second network node may forward the RF measurement result to the first network node.

A fourth implementation mode of the disclosure relates to a measurement configuration system for a terminal with a multi-RF receiving capability. The measurement configuration system for the terminal with the multi-RF receiving capability may include a terminal, a first network node in a first wireless network and a second network node in a second wireless network.

The terminal may be connected with the first network node through a first RF chain, and the terminal may be also connected with the second network node through a second RF chain.

The first network node is configured to send information of a measurement object to the second network node and acquire an RF measurement result of the terminal. Optionally, the first network node may obtain the RF measurement result from the terminal through the first RF chain. Optionally, the second network node may obtain the RF measurement result from the terminal through the second RF chain, and then the second network node may forward the RF measurement result to the first network node.

The second network node is configured to generate measurement configuration information according to the information of the measurement object.

The terminal is configured to acquire the measurement configuration information, make RF measurement by the second RF chain according to the measurement configuration information and report the measurement result.

The first implementation mode is a method implementation mode corresponding to the present implementation mode and the present implementation mode may be implemented in combination with the first implementation mode. Related technical details mentioned in the first implementation mode are still effective in the present implementation mode and, for reducing repetitions, will not be elaborated herein. Correspondingly, related technical details mentioned in the present implementation mode may also be applied to the first implementation mode.

A fifth implementation mode of the disclosure relates to a network system. The implementation mode is an implementation of the fourth implementation mode on a network side, and related details are the same as those in and may refer to the fourth implementation mode.

The network system may include a first network node in a first wireless network and a second network node in a second wireless network.

The first network node may be connected with a terminal through a first RF chain, and the second network node may be connected with the terminal through a second RF chain.

The first network node is configured to send information of a measurement object to the second network node and acquire an RF measurement result of the terminal.

The second network node is configured to generate measurement configuration information according to the information of the measurement object and send the generated measurement configuration information to the terminal to make RF measurement by the second RF chain according to the measurement configuration information.

A sixth implementation mode of the disclosure relates to a terminal. The implementation mode is an implementation of the fourth implementation mode on a terminal side, and related details are the same as those in and may refer to the fourth implementation mode.

The terminal may be connected with a first network node in a first wireless network through a first RF chain, and the terminal may be connected with a second network node in a second wireless network through a second RF chain.

The terminal may include:
a module configured to acquire measurement configuration information, the measurement configuration information being generated by the second network node according to information of a measurement object of the first network node;
a module configured to implement RF measurement by the second RF chain according to the measurement configuration information; and
a module configured to report an RF measurement result to the first network node.

A seventh implementation mode of the disclosure relates to a measurement configuration method for a terminal with a multi-RF receiving capability. In the implementation mode, the solution (two wireless networks) in the first implementation mode can be extended to a technical solution involving more wireless networks. The main difference is that the number of wireless networks is different and details about all the other aspects (such as an example of the measurement object, an example of the measurement configuration information and determination about whether to accept the measurement request or not) may refer to the first implementation mode.

According to the measurement configuration method for a terminal with a multi-RF receiving capability, the terminal is connected with a first network node in a first wireless network through a first RF chain, and the terminal is also connected with N network nodes in N different wireless networks through N RF chains respectively, N being a positive integer.

The method may include the following steps.

The first network node may send measurement request messages to the N network nodes respectively, each measurement request message including one piece of measurement object information respectively. Therefore, totally N pieces of measurement object information may be sent to the N network nodes in a one-to-one correspondence manner.

The N other network nodes may generate measurement configuration information according to the received measurement object information respectively; totally N pieces of measurement configuration information may be generated.

The terminal may acquire the N pieces of measurement configuration information. Optionally, all the N network nodes may send the measurement configuration information to the first network node, and the first network node may send the N pieces of measurement configuration information to the terminal through the first RF chain. Optionally, the N network nodes may send the measurement configuration information to the terminal through the RF chains between them and the terminal respectively. Optionally, part of network nodes in the N network nodes may send the measurement configuration information generated by them to the first network node, and the first network node may send the N pieces of measurement configuration information to the terminal through the first RF chain; and the other part of network nodes in the N network nodes may directly send the measurement configuration information generated by them to the terminal through the RF chains between them and the terminal respectively.

The terminal may implement RF measurement by the N RF chains according to the N pieces of measurement configuration information to obtain N RF measurement results.

The first network node may acquire the N RF measurement results. Optionally, the terminal may summarize the N RF measurement results and report them to the first network node through the first RF chain. Optionally, the terminal may report the N RF measurement results to the N network nodes through the N RF chains respectively, and the N network nodes may forward the RF measurement results to the first network node respectively. Optionally, the terminal may select one or more RF chains from the N RF chains connecting with the N network nodes and report the RF measurement results to one or more of the N network nodes through these RF chains, and then each network node receiving the RF measurement results may forward the RF measurement results to the first network node.

An eighth implementation mode of the disclosure relates to a measurement configuration system for a terminal with a multi-RF receiving capability.

The measurement configuration system for a terminal with a multi-RF receiving capability may include a terminal, a first network node in a first wireless network and N network nodes in N wireless networks. The terminal may be connected with the first network node in the first wireless network through a first RF chain, and the terminal may be also connected with the N network nodes in the N different wireless networks through N RF chains respectively, N being a positive integer.

The first network node is configured to send information of a measurement object to the N network nodes and acquire N RF measurement results respectively.

The N network nodes are configured to generate measurement configuration information according to the received information of a measurement object respectively, totally N pieces of measurement configuration information being generated.

The terminal is configured to acquire the N pieces of measurement configuration information and implement RF measurement by the N RF chains according to the N pieces of measurement configuration information to obtain the N RF measurement results.

The seventh implementation mode is a method implementation mode corresponding to the present implementation mode and the present implementation mode may be implemented in combination with the seventh implementation mode. Related technical details mentioned in the seventh implementation mode are also effective in the present implementation mode and, for reducing repetitions, will not be elaborated herein. Correspondingly, related technical details mentioned in the present implementation mode may also be applied to the seventh implementation mode.

Each method implementation mode of the disclosure can be implemented through software, hardware, firmware and the like. No matter whether the disclosure is implemented by software, hardware or firmware, instruction codes can be stored in any type of computer-accessible memory (for example, permanent or modifiable, volatile or non-volatile, solid-state or non-solid-state and fixed or removable media). Similarly, the memory may be, for example, a Programmable Array Logic (PAL), a Random Access Memory (RAM), a Programmable Read Only Memory (PROM), a Read-Only Memory (ROM), an Electrically Erasable Programmable ROM (EEPROM), a magnetic disk, an optical disk, a Digital Versatile Disc (DVD) and the like.

It is to be noted that each unit mentioned in each device implementation mode of the disclosure can be a logical unit. Physically, a logical unit can be a physical unit or a part of a physical unit, and can further be implemented by a combination of multiple physical units. A combination of functions implemented by these logical units, rather than Physical implementation modes of these logical units, is the key for solving the technical problem in the disclosure. In addition, for highlighting innovative parts of the disclosure, units not so closely related to the technical problem in the disclosure are not introduced in each device implementation mode of the disclosure, however, it does not mean that no more other units exist in the device implementation mode.

It is to be noted that, in the application document of the patent, a relationship term such as "first" and "second" is adopted to distinguish an entity or operation from another entity or operation only rather than require or imply existence of any practical relationship or sequence between these entities or operations. Moreover, terms "include" and "contain" or any other variant thereof is intended to cover nonexclusive inclusions, so that a process, method, object or device including a series of elements not only includes those elements but also includes other elements which are not clearly listed or further includes elements intrinsic to the process, the method, the object or the device. Under the condition of no more limitations, an element defined by the statement "including a/an" does not exclude existence of the same other elements in a process, method, object or device including the element. In the application document of the patent, execution of an operation according to a certain element refers to execution of the operation at least according to the element, and two conditions are included: execution of the operation only according to the element and execution of the operation according to the element and other elements. Expressions such as "multiple", "multiple times" and "various" include two, twice, two kinds, more than two, more than twice and more than two kinds.

## Claims

1. A measurement configuration method, **characterized by** comprising the following steps:
sending (203, 301), by a first network node, information of a measurement object to a second network node, wherein the measurement object is a frequency point, the information of the measurement object is used for the second network node to generate part of measurement configuration information, the first network node is a master node, and the second network node is a secondary node;
receiving (207), by the first network node, the part of measurement configuration information from the second network node, and sending, by the first network node, the part of measurement configuration information to a multi-Radio Frequency, RF, chain terminal through an RF chain of the terminal for connection between the first network node and the multi-RF chain terminal; and
receiving (209, 306), by the first network node, a measurement result obtained at the measurement object based on the part of measurement configuration information from the multi- RF chain terminal,
wherein the part of measurement configuration information comprises a measurement gap and a correspondence between a measurement gap and a measurement object; and
wherein, receiving, by the first network node, the measurement result obtained at the measurement object from the multi-RF chain terminal comprises:
receiving, by the first network node, the measurement result through an RF chain for connection between the first network node and the multi-RF chain terminal.

2. The measurement configuration method of claim 1, wherein the measurement object is out of a band range supported by an RF chain connecting the first network node with the multi-RF chain terminal.

3. A measurement configuration method, **characterized by** comprising the following steps:
receiving (203, 301), by a second network node, information of a measurement object from a first network node, wherein the measurement object is a frequency point;
generating, by the second network node, part of measurement configuration information based on the information of the measurement object; and
sending, by the second network node, the part of measurement configuration information to the first network node, wherein the part of measurement configuration information is sent by the first network node to a multi-Radio Frequency, RF, chain terminal through an RF chain of the terminal for connection between the first network node and the multi-RF chain terminal; and the part of measurement configuration information is used for the multi-RF chain terminal to report a measurement result obtained at the measurement object based on the part of measurement configuration information to the first network node;
wherein the first network node is a master node, and the second network node is a secondary node,
wherein the part of measurement configuration information comprises a measurement gap and a correspondence between a measurement gap and a measurement object.

4. A network system, comprising a first network node and a second network node, wherein
the first network node is configured to send information of a measurement object to a second network node, wherein the measurement object is a frequency point,
the second network node is configured to generate part of measurement configuration information based on the information of the measurement object, and send the part of measurement configuration information to the first network node; the first network node is a master node, and the second network node is a secondary node; and
the first network node is further configured to: send the part of measurement configuration information to a multi-Radio Frequency, RF, chain terminal through an RF chain of the terminal for connection between the first network node and the multi-RF chain terminal through an RF chain for connection between the first network node and the multi-RF chain terminal; and receive a measurement result obtained at the measurement object based on the part of measurement configuration information from the multi- RF chain terminal,
wherein the part of measurement configuration information comprises a measurement gap and a correspondence between a measurement gap and a measurement object.

## Patentansprüche

1. Messkonfigurationsverfahren, **dadurch gekennzeichnet, dass** es die folgenden Schritte umfasst:
Senden (203, 301) von Information eines Messobjekts durch einen ersten Netzwerkknoten an einen zweiten Netzwerkknoten, wobei das Messobjekt ein Frequenzpunkt ist, die Information des Messobjekts für den zweiten Netzwerkknoten verwendet wird, um einen Teil Messkonfigurationsinformation zu erzeugen, der erste Netzwerkknoten ein Masterknoten ist und der zweite Netzwerkknoten ein Sekundärknoten ist;
Empfangen (207) des Teils Messkonfigurationsinformation von dem zweiten Netzwerkknoten durch den ersten Netzwerkknoten und Senden des Teils Messkonfigurationsinformation an ein Multi-Funkfrequenz(RF)-Kettenendgerät über eine RF-Kette des Endgeräts zur Verbindung zwischen dem ersten Netzwerkknoten und dem Multi-RF-Kettenendgerät; und
Empfangen (209, 306) eines Messergebnisses, das an dem Messobjekt auf Grundlage des Teils Messkonfigurationsinformation von dem Multi-RF-Kettenendgerät erlangt wird, durch den ersten Netzwerkknoten,
wobei der Teil Messkonfigurationsinformation eine Messlücke und eine Übereinstimmung zwischen einer Messlücke und einem Messobjekt umfasst; und
wobei das Empfangen des Messergebnisses, das an dem Messobjekt von dem Multi-RF-Kettenendgerät erlangt wird, durch den ersten Netzwerkknoten umfasst:
Empfangen des Messergebnisses über eine RF-Kette zur Verbindung zwischen dem ersten Netzwerkknoten und dem Multi-RF-Kettenendgerät durch den ersten Netzwerkknoten.

2. Messkonfigurationsverfahren nach Anspruch 1, wobei das Messobjekt außerhalb einer Bandreichweite liegt, die von einer RF-Kette, die den ersten Netzwerkknoten mit dem Multi-RF-Kettenendgerät verbindet, unterstützt wird.

3. Messkonfigurationsverfahren, **dadurch gekennzeichnet, dass** es die folgenden Schritte umfasst:
Empfangen (203, 301) von Information eines Messobjekts von einem ersten Netzwerkknoten durch einen zweiten Netzwerkknoten, wobei das Messobjekt ein Frequenzpunkt ist;
Erzeugen eines Teils Messkonfigurationsinformation durch den zweiten Netzwerkknoten auf Grundlage der Information des Messobjekts; und
Senden des Teils Messkonfigurationsinformation an den ersten Netzwerkknoten durch den zweiten Netzwerkknoten, wobei der Teil Messkonfigurationsinformation durch den ersten Netzwerkknoten an ein Multi-Funkfrequenz(RF)-Kettenendgerät über eine RF-Kette des Endgeräts zur Verbindung zwischen dem ersten Netzwerkknoten und dem Multi-RF-Kettenendgerät gesendet wird; und der Teil Messkonfigurationsinformation für das Multi-RF-Kettenendgerät verwendet wird, um ein Messergebnis, das an dem Messobjekt auf Grundlage des Teils Messkonfigurationsinformation erlangt wird, an den ersten Netzwerkknoten zu melden;
wobei der erste Netzwerkknoten ein Masterknoten ist und der zweite Netzwerkknoten ein Sekundärknoten ist,
wobei der Teil Messkonfigurationsinformation eine Messlücke und eine Übereinstimmung zwischen einer Messlücke und einem Messobjekt umfasst.

4. Netzwerksystem, das einen ersten Netzwerkknoten und einen zweiten Netzwerkknoten aufweist, wobei
der erste Netzwerkknoten dazu ausgebildet ist, Information eines Messobjekts an einen zweiten Netzwerkknoten zu senden, wobei das Messobjekt ein Frequenzpunkt ist,
der zweite Netzwerkknoten dazu ausgebildet ist, einen Teil Messkonfigurationsinformation auf Grundlage der Information des Messobjekts zu erzeugen und den Teil Messkonfigurationsinformation an den ersten Netzwerkknoten zu senden; wobei der erste Netzwerkknoten ein Masterknoten ist und der zweite Netzwerkknoten ein Sekundärknoten ist; und
der erste Netzwerkknoten ferner dazu ausgebildet ist: den Teil Messkonfigurationsinformation an ein Multi-Funkfrequenz(RF)-Kettenendgerät über eine RF-Kette des Endgeräts zur Verbindung zwischen dem ersten Netzwerkknoten und dem Multi-RF-Kettenendgerät über eine RF-Kette zur Verbindung zwischen dem ersten Netzwerkknoten und dem Multi-RF-Kettenendgerät zu senden; und ein Messergebnis, das an dem Messobjekt auf Grundlage des Teils Messkonfigurationsinformation erlangt wird, von dem Multi-RF-Kettenendgerät zu empfangen,
wobei der Teil Messkonfigurationsinformation eine Messlücke und eine Übereinstimmung zwischen einer Messlücke und einem Messobjekt umfasst.

## Revendications

1. Procédé de configuration de mesure, **caractérisé en ce qu'**il comprend les étapes suivantes :
l'envoi (203, 301), par un premier noeud de réseau, d'informations d'un objet de mesure à un second noeud de réseau, dans lequel l'objet de mesure est un point de fréquence, les informations de l'objet de mesure sont utilisées pour que le second noeud de réseau génère une partie d'informations de configuration de mesure, le premier noeud de réseau est un noeud maître, et le second noeud de réseau est un noeud secondaire ;
la réception (207), par le premier noeud de réseau, de la partie d'informations de configuration de mesure en provenance du second noeud de réseau, et l'envoi, par le premier noeud de réseau, de la partie d'informations de configuration de mesure à un terminal de chaîne multi-Radio Fréquence, RF, par l'intermédiaire d'une chaîne RF du terminal pour une connexion entre le premier noeud de réseau et le terminal de chaîne multi-RF ; et
la réception (209, 306), par le premier noeud de réseau, d'un résultat de mesure obtenu au niveau de l'objet de mesure sur la base de la partie d'informations de configuration de mesure en provenance du terminal de chaîne multi-RF,
dans lequel la partie d'informations de configuration de mesure comprend un intervalle de mesure et une correspondance entre un intervalle de mesure et un objet de mesure ; et
dans lequel, la réception, par le premier noeud de réseau, du résultat de mesure obtenu au niveau de l'objet de mesure en provenance du terminal de chaîne multi-RF comprend :
la réception, par le premier noeud de réseau, du résultat de mesure par l'intermédiaire d'une chaîne RF pour une connexion entre le premier noeud de réseau et le terminal de chaîne multi-RF.

2. Procédé de configuration de mesure selon la revendication 1, dans lequel l'objet de mesure est en-dehors d'une plage de bande prise en charge par une chaîne RF connectant le premier noeud de réseau au terminal de chaîne multi-RF.

3. Procédé de configuration de mesure, **caractérisé en ce qu'**il comprend les étapes suivantes :
la réception (203, 301), par un second noeud de réseau, d'informations d'un objet de mesure en provenance d'un premier noeud de réseau, dans lequel l'objet de mesure est un point de fréquence ;
la génération, par le second noeud de réseau, d'une partie d'informations de configuration de mesure sur la base des informations de l'objet de mesure ; et
l'envoi, par le second noeud de réseau, de la partie d'informations de configuration de mesure au premier noeud de réseau, dans lequel la partie d'informations de configuration de mesure est envoyée par le premier noeud de réseau à un terminal de chaîne multi-Radio Fréquence, RF, par l'intermédiaire d'une chaîne RF du terminal pour une connexion entre le premier noeud de réseau et le terminal de chaîne multi-RF ; et la partie d'informations de configuration de mesure est utilisée pour que le terminal de chaîne multi-RF rapporte un résultat de mesure obtenu au niveau de l'objet de mesure sur la base de la partie d'informations de configuration de mesure au premier noeud de réseau ;
dans lequel le premier noeud de réseau est un noeud maître, et le second noeud de réseau est un noeud secondaire,
dans lequel la partie d'informations de configuration de mesure comprend un intervalle de mesure et une correspondance entre un intervalle de mesure et un objet de mesure.

4. Système de réseau, comprenant un premier noeud de réseau et un second noeud de réseau, dans lequel le premier noeud de réseau est configuré pour envoyer des informations d'un objet de mesure à un second noeud de réseau, dans lequel l'objet de mesure est un point de fréquence,
le second noeud de réseau est configuré pour générer une partie d'informations de configuration de mesure sur la base des informations de l'objet de mesure, et envoyer la partie d'informations de configuration de mesure au premier noeud de réseau ; le premier noeud de réseau est un noeud maître, et le second noeud de réseau est un noeud secondaire ; et
le premier noeud de réseau est en outre configuré pour : envoyer la partie d'informations de configuration de mesure à un terminal de chaîne multi-Radio Fréquence, RF, par l'intermédiaire d'une chaîne RF du terminal pour une connexion entre le premier noeud de réseau et le terminal de chaîne multi-RF par l'intermédiaire d'une chaîne RF pour une connexion entre le premier noeud de réseau et le terminal de chaîne multi-RF ; et recevoir un résultat de mesure obtenu au niveau de l'objet de mesure sur la base de la partie d'informations de configuration de mesure en provenance du terminal de chaîne multi-RF,
dans lequel la partie d'informations de configuration de mesure comprend un intervalle de mesure et une correspondance entre un intervalle de mesure et un objet de mesure.
